Europäisches Patentamt

(19) European Patent Office

Office européen des brevets

(11) Publication number: **0 447 197 A2**

# EUROPEAN PATENT APPLICATION

(21) Application number: **91302092.1**

(22) Date of filing: **13.03.91**

(51) Int. Cl.⁵: **H04N 5/275, H04N 9/76**

The title of the invention has been amended (Guidelines for Examination in the EPO, A-III, 7.3).

(30) Priority: **14.03.90 US 494031**

(43) Date of publication of application:
**18.09.91 Bulletin 91/38**

(84) Designated Contracting States:
**DE FR GB**

(71) Applicant: **Hewlett-Packard Company
Mail Stop 20 B-O, 3000 Hanover Street
Palo Alto, California 94304 (US)**

(72) Inventor: **Gengler, Joel D.
451 E. Boardwalk Drive, Apt. 810-G
Fort Collins, Colorado 80525 (US)**
Inventor: **Reak, Brad D.
8529 Firethorn Drive
Loveland, Colorado 80538 (US)**

(74) Representative: **Colgan, Stephen James et al
CARPMAELS & RANSFORD 43 Bloomsbury
Square
London WC1A 2RA (GB)**

(54) **Digital image blending on a pixel-by-pixel basis.**

(57)     A digital image blending circuit which lets a user draw several planar images and then sum them together with a scalable "blend" function. An image frame buffer (202) is subdivided to store multiple images provided by the user, and the resulting multiple images are combined as a single image within a display window on a pixel by pixel basis by the blender of the invention. The blender (206, 208, 210) of the invention sums the pixel color data on a per-pixel basis, where the pixel data is scaled as a separate operation on color map (205, 207, 209, 211) entries. Control information (BMC) is fed to the blender on pixel boundaries from the frame buffer, and the blender (206, 208, 210) responds to combine the images in accordance with the preferences of the user. As a result, each display pixel may selectively show a single image or a combined image from the associated window. The invention also allows for separate processing of data within each window by defining each pixel with respect to its window boundaries.

EP 0 447 197 A2

_Fig.3_

## DIGITAL IMAGE BLENDING ON A PER-PIXEL BASIS

### BACKGROUND OF THE INVENTION

#### Field of the Invention

The present invention relates to raster scanned video display devices, and more particularly, to a method and apparatus for blending a plurality of digital images on a pixel by pixel basis for display on a display monitor.

#### Description of the Prior Art

Typically, image data for display on a raster scanned display device is stored in a circuit called a frame buffer. The frame buffer is preferably wide enough to accommodate the largest image display mode. Typical frame buffer widths are 8, 16 or 24 planes, where a plane is normally one bit of information wide. The raster images are drawn by processing the data value stored in the frame buffer to arrive at values suitable for display.

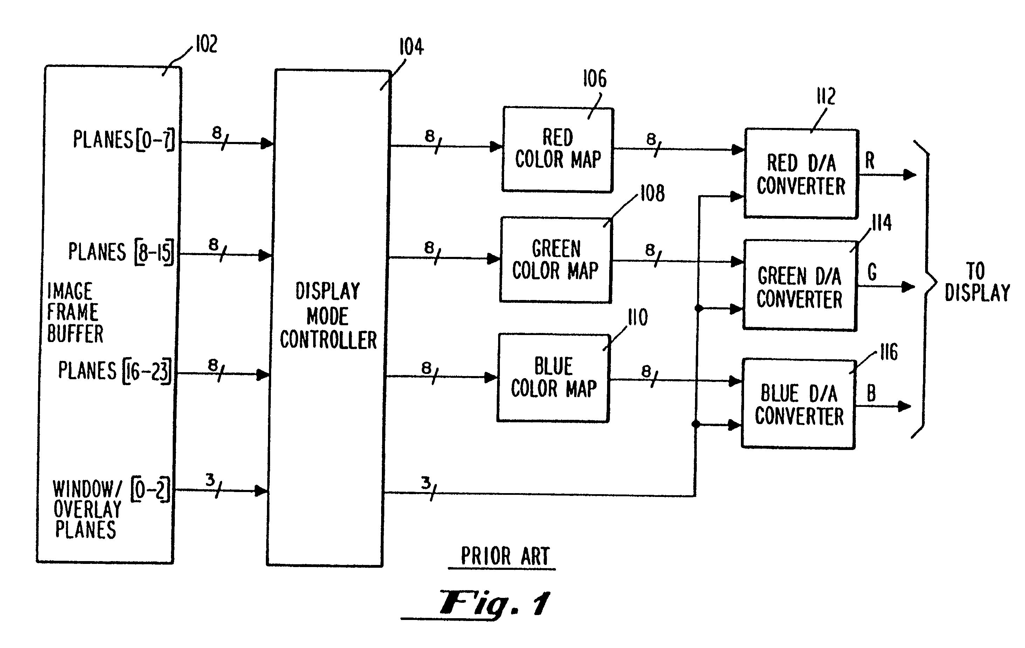

For example, as shown in FIGURE 1, an image frame buffer 102 having 24 planes of information and three bits of window/overlay plane information may provide its outputs to display mode controller 104, where a display mode, such as full color, eight-bit indexed, and the like is determined. The data output of the display mode controller 104 is typically post- processed in another device called a color map, also known as a color table, color look-up table or color ROM. As shown, a different color map may be provided for the red (106), green (108) and blue (110) colors. The outputs from the display mode controller 104 are typically provided as indices to the respective color maps, and for the eight plane system shown, $2^8$ (= 256) intensity values for red and for green and for blue may be respectively provided. Thus, the color intensity values stored in the color maps are accessed for one or more adjacent pixels by using the inputted planes as indices to these intensity values and then outputting the result.

Each color map thus translates the image data into component colors, which are normally, but not necessarily, red, green and blue (RGB). Often data from the image frame buffer 102 is also multiplexed into the color maps to create different display modes by display mode controller 104. Host display devices then use the output of the color maps to feed the input of three digital to analog converters 112, 114 and 116, respectively, to obtain an RGB analog video signal which is then used to drive the video display unit. Of course, for a monochrome display, only one digital to analog converter is necessary.

In such raster scanned frame buffers, it has often been desirable to segment the frame buffer 102 into regions of interest called "windows". Separate and independent windows have been used to provide independent modes of display. Normally, the window regions within the image frame buffer 102 are identified by extending the frame buffer width another three or four planes as shown in FIGURE 1 to allow for a tag field, by which each display region may be identified. A tag field of three planes allows for eight unique windows, where a tag field of four planes allows for sixteen unique window regions.

When it has been desired to combine a plurality of images output from display circuits of the type shown in FIGURE 1, the analog RGB outputs of each circuit are added together before being input to the video display unit. In particular, analog RGB outputs for each image to be displayed are summed in an analog adder and then clamped at a predetermined level so as not to oversaturate the video display device. This combining occurs during scanning in order to achieve the proper result.

However, the prior art technique of combining the analog RGB signals for display in this manner has numerous drawbacks. In particular, since the blending occurs after the digital to analog conversion, the blending cannot occur on a pixel by pixel basis, and accordingly, window boundaries may not be properly distinguished for display. Moreover, only one color map is provided for the entire display device, and thus separate color maps for each image may not be provided. In addition, the prior art technique has problems in that the digital to analog converters must be matched to each other or else intensity changes will occur between respective images. Blending of the signals in this manner also causes bandwidth problems, and since processing is performed in analog, the image processing is relatively slow.

Accordingly, there is a long-felt need in the art for a process and apparatus which enables a plurality of images to be blended for display on a pixel by pixel basis. In addition, there is a long-felt need in the art for a process and apparatus which enables window boundaries to be distinguished in the displayed image so that separate processing may occur in each window. The present invention has been designed for these purposes.

## SUMMARY OF THE INVENTION

The above-mentioned long-felt needs in the art have been met in accordance with the present invention, which relates to a method and apparatus in which a frame buffer may be subdivided, along window plane boundaries, into multiple images which are then processed through independent color maps and re-combined back into a single image on arbitrary window boundaries. Each window region may be configured, for example, via software such that the window regions are independent, and image blending can be on or off with no loss of frame buffer capability or signal quality to other window regions. In other words, separate image regions may be defined and overlayed where one image is dominant or where two or more images may be seen at each point. Display cursors and overlay planes may be handled as a special case of the general blending, whereby the display cursors and overlay planes are blended with the window images and hence are selectively visible or invisible.

In accordance with the invention, a device is provided for blending at least two digital images for display on a display device. Such a device in accordance with the invention comprises means for providing the at least two digital images for display, means for adding the digital images on a pixel by pixel basis in accordance with a blending mode specified by a viewer of the display device and means for converting a sum output of the adding means into an analog signal for display on the display device. Preferably, the providing means comprises an image frame buffer which is subdivided, along display window boundaries, into the at least two digital images for display. Also, the providing means may further comprise a display mode controller for providing separate modes of display for each display window. In addition, the providing means may further comprise at least one color map for each of the display windows of the image frame buffer for translating digital representations of the digital images into component colors of the digital images.

In accordance with a preferred embodiment of the invention, the adding means comprises a blender for each of the component colors. Each blender blends one of the component colors from each of the digital images into a sum for each component color on a pixel by pixel basis in accordance with the blending mode, and for this purpose, each blender comprises a digital logic circuit for passing each digital image to an output if so specified by a blending mode signal, pixel adding means for adding corresponding pixels of the same component from each digital image which is to be passed to the output, and means for clamping a sum output of the pixel adding means to prevent oversaturation of the resulting image. In addition, the device of the invention may comprise a mode decoder for providing the blending mode signal to the digital logic circuit in accordance with the blending mode specified by the viewer.

In accordance with another preferred embodiment of the invention, one of the digital images to be displayed may be given priority over each other digital image for a given pixel by setting a dominance bit in the data for the image to be given priority. This dominance bit may then be used by the mode controller to override the blending mode signal for the given pixel. For example, the dominant image may be the cursor of the display device or an overlay plane. In addition, the display mode controller may comprise a register file for storing the blending mode specified by the viewer for a display window specified by the viewer. Thus, each window may be given different display modes in accordance with the user's requests.

The present invention further comprises a method of blending at least two digital images for display on a display device, where the method in accordance with the invention comprises the steps of:

providing the at least two digital images for display;

adding the digital images on a pixel by pixel basis in accordance with a blending mode specified by a viewer of the display device; and

converting a sum output of the adding means into an analog signal for display on the display device.

In accordance with preferred embodiments of the method of the invention, the providing step comprises the step of subdividing an image frame buffer along display window boundaries into the at least two digital images for display as well as a step of providing separate modes of display for each display window of the image frame buffer. In addition, a further step of the method in accordance with the invention may include the step of translating digital representations of the digital images into component colors of the digital images, whereby the adding step comprises the step of blending one of the component colors from each of the digital images into a sum for each component color on a pixel by pixel basis in accordance with the blending mode.

The adding step in accordance with the invention may also comprise the steps of passing each digital image to an output if so specified by a blending mode signal, adding corresponding pixels of the same component from each digital image which is to be passed to the output, and clamping a sum output of the pixel adding step to prevent oversaturation of the resulting image. In addition, one digital image may be given priority over each other digital image for a given pixel by setting a dominance bit in the data for the image to be given priority.

In accordance with another preferred method of the invention, a method is provided for blending at least two digital images for display on a display device, the method comprising the steps of:

subdividing an image frame buffer along display window boundaries into the at least two images for display;

providing separate modes of display for each of the display windows;

adding images within a display window on a pixel by pixel basis in accordance with a blending mode specified by a viewer of the display device, the adding step including the step of blending corresponding component colors from each of the images into a sum for each component color on a pixel by pixel basis in accordance with the blending mode; and

converting a sum output of the adding step into an analog signal for display on the display device.

These and other features of the invention enable the invention to provide images which may be distinguished on window boundaries for display and to allow separate processing for the images in separate windows. Moreover, no intensity adjustments are necessary since the image blending is done in digital form, and as a result, improved processing speed is possible. These and other features of the invention will be made more clear from the following detailed description.

## BRIEF DESCRIPTION OF THE DRAWINGS

The objects and advantages of the invention will become more apparent and more readily appreciated from the following detailed description of the presently preferred exemplary embodiment of the invention taken in conjunction with the accompanying drawings, of which:

FIGURE 1 schematically illustrates a prior art color display sub-system.

FIGURE 2 schematically illustrates an improved display sub-system incorporating a digital image blending circuit in accordance with the invention.

FIGURE 3 schematically illustrates a block diagram of a preferred embodiment of a blending circuit of the type shown in FIGURE 2 in accordance with the invention.

FIGURE 4 schematically illustrates a mode decoder which provides control signals to the digital image blending circuits of FIGURES 2 and 3 in accordance with the invention.

## DETAILED DESCRIPTION OF THE PRESENTLY PREFERRED EXEMPLARY EMDODIMENT

The inventors of the subject matter disclosed and claimed herein have satisfied the above-mentioned long-felt needs in the art by developing a digital image blending technique which lets a user blend several window images plus an additional cursor or overlay image using overlay planes by summing the images using a scalable blend function so as to provide a more versatile display. Such a blender may be responsible only for the summation of pixel color data, where the actual scaling may be done as a separate operation on color map entries. Such "image blending" as defined for the purpose of this application is the summation of like colors from different color maps. For example, eight bits of red intensity information from four different color maps may be summed together and clamped to produce a total red intensity level. Green and blue values are treated in a like manner. Image intensity scaling is thus accomplished by scaling data in the color maps to achieve the desired visual effect.

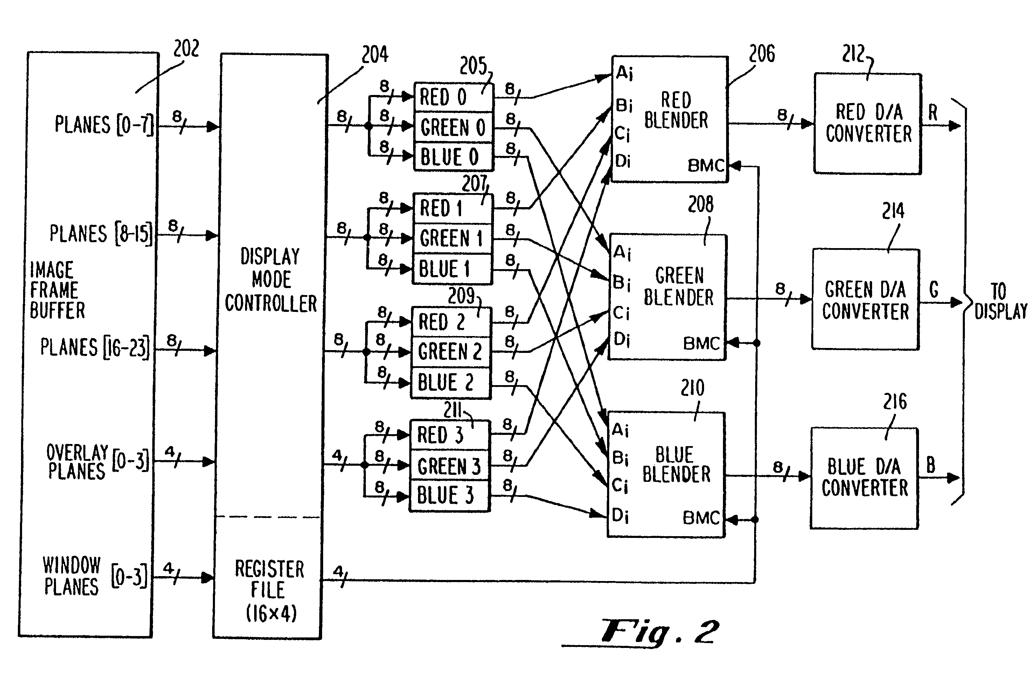

A digital image blending device with the above-mentioned beneficial features in accordance with a presently preferred exemplary embodiment of the invention will now be described with reference to FIGURES 2-4. It will be appreciated by those of ordinary skill in the art that the description given herein is for exemplary purposes only and is not intended in any way to limit the scope of the invention. All questions regarding the scope of the invention may be resolved by referring to the appended claims.

FIGURE 2 shows the digital image blending circuit (or "blender") in accordance with the invention. As with the prior art color display sub-system of FIGURE 1, the circuit of FIGURE 2 includes an image frame buffer 202, a display mode controller 204 and D/A converters 212, 214 and 216 for each color output. As shown, the image frame buffer of the circuit of FIGURE 2 allows up to 24 image planes in groups of eight to be output for display. In accordance with the invention, these planes may be developed by partitioning the image frame buffer 202 into groups of eight planes, whereby each group of eight planes represents one image (rather than having one 24 plane image as when no blending occurs). As noted above, each plane is one bit deep, and the number of planes determines the number of colors available as previously described. For example, given a group of eight image planes for each image, 256 colors are available for each image. As before, these images may be outputted to display mode controller 204 for creating different display modes such as full color, eight bit indexed, and the like.

As shown in FIGURE 2, the image blending circuit in accordance with the invention may be implemented within the context of four relatively standard color maps 205, 207, 209 and 211. Each of the color maps may be addressed with the indices of each image for providing the corresponding red, green and blue output values, which are then output to the corresponding blending circuits of the invention. Blending circuits 206, 208 and 210 are installed between the outputs of the color maps and the input of digital to analog converters 212, 214 and 216 as shown. Therefore, each of the blender circuits 206, 208 and 210 are used for each color map data path, where each blender corresponds to a component color such as red, green or blue, as determined by a personality bit PER to be described below. As can be seen from FIGURE 2, each blender may have an 8-bit connection to each color table 205, 207, 209 and 211 at respective outputs corresponding to the red, green or blue table sections.

Each blender has four separate 8-bit inputs, labelled $A_i$, through $D_i$, 4-bits of control information labelled BMC, and two bits of personality information labelled PER. $A_i$ is an 8-bit input which is provided for respective color inputs for an "A" image, while $B_i$ and $C_i$ are the respective color inputs for the "B" and "C" images. The $D_i$ input, on the other hand, is provided for an overlay image comprised of image data from the overlay/cursor color map 211. The BMC input is the blender mode control input which selects which of the A, B, and C images are to be added to the overlay/cursor image at input D in accordance with the invention, while PER corresponds to the personality bits of each blender which determines whether the particular blender is a red, green or blue blender. A DOM bit also may be provided for certain pixels to specify whether the overlay/cursor is to be dominant, or, in other words, to instruct the blender to ignore the mode control provided by the BMC and personality PER to pass only the overlay/cursor image to the output at a corresponding display point. Such bits may be used, for example, to outline a window on the display screen.

The blend mode control (BMC) input to each blender is driven by the window planes provided from image frame buffer 202, the planes being translated through a window register file of appropriate size in the display mode controller 204. As shown in FIGURE 2, the window register file may be implemented as 16 words by four bits for translating window tag bits to BMC inputs. The window register file may be used to specify how to process each pixel within each window by specifying a different display mode for different windows of the display device. This is done by giving different BMC values to each window to be rendered on the display device. The window register file thus enables images within each window to be processed concurrently.

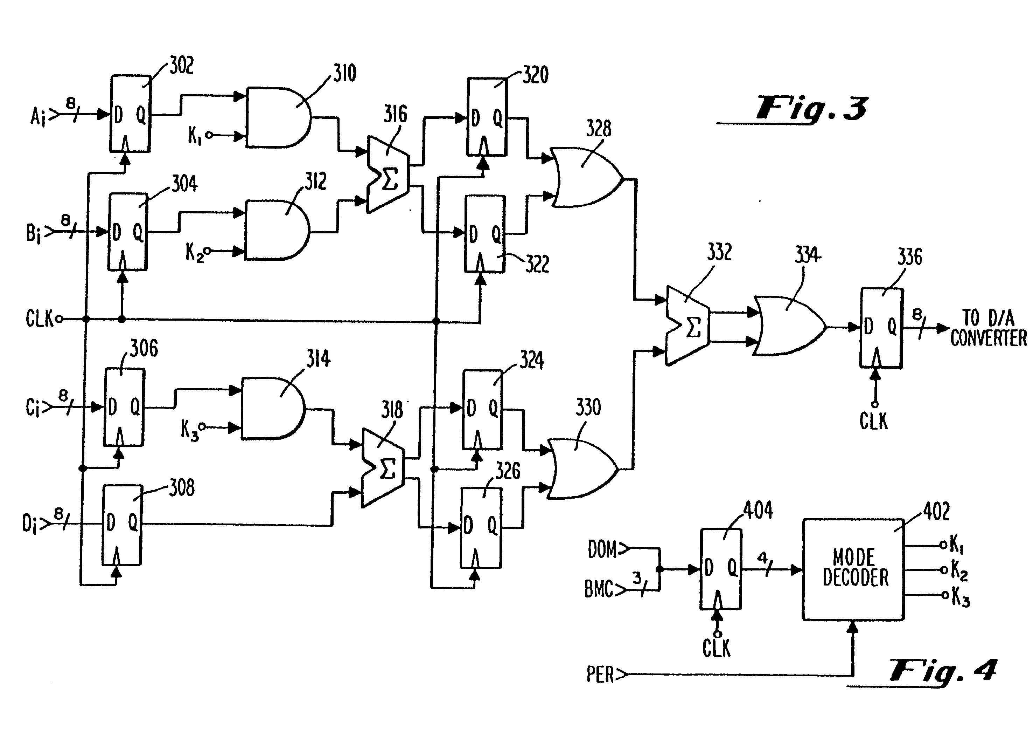

As will be described in more detail below with respect to FIGURE 4, the user may select any combination of inputs to each of the blender circuits under software control by altering the values in the window register files corresponding to the region of interest. The invention thus allows the display system to behave as would a typical single color map display system; however, the invention also provides the ability to sum output data from separate color maps to create a composite image including several windows, for example.

The blender circuits will now be described in more detail with respect to FIGURE 3. FIGURE 3 shows an example of a blender circuit in accordance with the invention which is configured to allow compositing and clamping of input image data. As shown, each image blender latches all input data for inputs $A_i$, $B_i$, $C_i$, and $D_i$ at latches 302, 304, 306 and 308, respectively, using a clock signal CLK which has a timing equal to one pixel duration. All data except the data on input $D_i$ is then passed through a stage of AND gates 310, 312 and 314, respectively. The gates are driven by combinational logic controlled by the BMC inputs and the blender personality PER data inputs, respectively, as will be described in more detail below with respect to Table 1 and FIGURE 4. The sums of the processed inputs ($A_i+B_i$+carry out) and ($C_i+D_i$+carry out) are then determined in summers 316 and 318. The respective outputs of the summers 316 and 318 are then latched by latches 320, 322, 324 and 326, respectively, and the outputs of the latches are then clamped at OR circuits 328 and 330 to prevent the sums of adders 316 and 318 from exceeding the eight-bit value 255 by ORing the carry outs of the adders with the sums. In other words, $A_i+B_i$ and $C_i+D_i$ are separately clamped to no more than 255 ($<2^8$). The sums of $A_i+B_i$ and $C_i+D_i$ are then determined at adder 332, and the result is clamped at OR circuit 334 to prevent the output from exceeding the 8-bit value 255 by ORing the carry out of adder 332 with the sum. In other words, $A_i+B_i+C_i+D_i$ must be less than 255. The result is then piped to the output by latch 336.

Thus, the $A_i$, $B_i$, $C_i$ and overlay/cursor image data $D_i$, as well as the mode and the dominance bits may be latched into the blending circuits by the CLK signals in accordance with the invention. The digital image blender accepts the input data for one pixel every CLK cycle. Then the blended output result for each pixel is determined by the mode (BMC), the dominance (DOM) and personality (PER) inputs as shown in the following TABLE 1:

## TABLE 1

| | BMC > 0 | | | | BMC = 0 | |
|---|---|---|---|---|---|---|
| BMC | DOM=0 | DOM=1 | PER | DOM=0 | DOM=1 |
| 1 | A+D | D | 0 | A+D | D |
| 2 | B+D | D | 1 | B+D | D |
| 3 | A+B+D | D | 2 | C+D | D |
| 4 | C+D | D | 3 | X | D |
| 5 | A+C+D | D | | | |
| 6 | B+C+D | D | | | |
| 7 | A+B+C+D | D | | | |

The present embodiment of the invention thus allows for compositing of up to four separate images from among four different images which are drawn from different portions of the frame buffer 202 on a per pixel (window oriented) basis, although in other embodiments additional images may be composited by further subdividing the image frame buffer and providing additional hardware in accordance with the invention. As can be seen from FIGURE 3, the output stage of the digital image blender is really the quantity $A_i + B_i + C_i + D_i$ where the values $A_i$, $B_i$ and $C_i$ may be driven to 0 by the BMC inputs in accordance with the values of $k_1$, $k_2$ and $k_3$. This functionality allows the image to take on discrete values from $D_i$ through $A_i + B_i + C_i + D_i$ as long as the sum does not exceed 255.

In particular, as shown in TABLE 1 and in FIGURE 4, mode decoder 402 of the invention may select whether to display a given image by appropriately providing 0 or 1 outputs for $k_1$, $k_2$ and $k_3$. For each mode decoder 402 of each blender, the color of the associated blender is determined by the personality bits PER, and "zero" is provided for one of the bits $k_1$, $k_2$ and $k_3$ if the corresponding input image is not to be shown on the screen, while a "one" is output for one of the k values if the corresponding image is to be blended for display. This is determined by the values of BMC and DOM as shown in TABLE 1, which are latched to mode decoder 402 via latch 404 as shown in FIGURE 4. As noted above, these values may determine whether to display particular overlay input planes for up to 16 window overlays, whereby the pixels in some windows may be blended but not in others. In addition, the value of DOM specifies whether a given image is to have dominance over the other images such that only the pixels for that particular image are displayed whereas the pixel values for the other images are not displayed at the corresponding display pixel. As noted above, such is preferable for use in defining the boundaries around the windows.

Although an exemplary embodiment of the invention has been described in detail above, those skilled in the art will readily appreciate that many additional modifications are possible in the exemplary embodiments without materially departing from the novel teachings and advantages of the invention. For example, the output of mode decoder 402 may be varied to indicate whether the output is to be color or monochrome for each window, and the input value $D_i$ could be masked. In addition, the circuit of the invention may be modified to allow for digital image comparison by subtracting one image from another to determine whether the images are exactly the same. In such an embodiment, the mode controller could be modified to allow a subtractor to clamp the difference between respective images to the minimum intensity value, to overflow the subtract by getting the maximum intensity if the subtracted image is slightly more intense than the base image, or to provide a magnitude subtract where the resulting image is the absolute value of the subtract. Separate control may also be provided to accentuate the differences by either left shifting the result or by generating maximum intensity for any non-zero difference. As with the above-described embodiment, control may be provided on a per-pixel basis so that different comparisons may take place in different windows. Accordingly, all such modifications are intended to be included within the scope of this invention as defined in the following claims.

## Claims

1.  A device for blending at least two digital images for display on a display device, comprising:
    means (202) for providing said at least two digital images for display;
    means (206, 208, 210) for adding said digital images on a pixel by pixel basis in accordance with a blending mode specified by a viewer of said display device; and
    means (212, 214, 216) for converting a sum output of said adding means into an analog signal for display on said display device.

2. A device for blending at least two digital images for display on a display device, comprising:

an image frame buffer (202) which is subdivided, along display window boundaries, into said at least two digital images for display;

a display mode controller (204) for providing separate modes of display for each of the display windows;

means for adding (206, 208, 210) said at least two digital images on a pixel by pixel basis in accordance with a blending mode specified by a viewer of said display device, said adding means comprising a blender (206, 208, 210) for each component color of said images, each blender blending one of said component colors from each of said images into a sum for each component color on a pixel by pixel basis in accordance with said blending mode; and

means for converting (212, 214, 216) a sum output of said adding means into an analog signal for display on said display device.

3. A device as in claim 2, further comprising at least one color map (205, 207, 209, 211) for each display window for translating digital representations of said images into component colors of said images for display.

4. A device as in claim 2, wherein each blender comprises a digital logic circuit (310, 312, 314) for passing each image to an output if so specified by a blending mode signal (BMC), pixel adding means (316, 318) for adding corresponding pixels of the same component from each image which is to be passed to said output, and clamping means (328, 330) for clamping a sum output of said pixel adding means to prevent oversaturation of the resulting image.

5. A device as in claim 4, further comprising a mode decoder (402) for providing said blending mode signal (BMC) to said digital logic circuit in accordance with the blending mode specified by the viewer.

6. A device as in claim 2, wherein pixels in one image may be given priority over corresponding display pixels in other images by setting a dominance bit in the data for the image to be given priority, said dominance bit being used by said mode controller (204) to override said blending mode signal (BMC) for the pixels of said one image.

7. A device as in claim 2, wherein at least one of a cursor of said display device and an overlay plane comprise one of said images.

8. A device as in claim 5, wherein said display mode controller (204) comprises a register file for storing the blending mode specified by the viewer for a display window specified by the viewer.

9. A method of blending at least two digital images for display on a display device, comprising the steps of:

providing said at least two digital images for display (202);

adding said digital images on a pixel by pixel basis in accordance with a blending mode specified by a viewer of said display device (206, 208, 210); and

converting a sum output of said adding means into an analog signal for display on said display device (212, 214, 216).

**Fig. 1**

PRIOR ART

_Fig. 2_

Fig.3

Fig.4

EP 0 447 197 A2

11